# EUROPÄISCHE PATENTSCHRIFT

(11) **EP 0 770 008 B1**
(45) Veröffentlichungstag und Bekanntmachung des Hinweises auf die Patenterteilung: **22.04.1998**
(21) Anmeldenummer: 95928448.0
(22) Anmeldetag: 12.07.1995
(51) Int. Cl.: B60K 17/28

(54) **ANTRIEBSVORRICHTUNG FÜR LANDWIRTSCHAFTLICHE ERNTEMASCHINEN**
DRIVE DEVICE FOR AGRICULTURAL HARVESTERS
DISPOSITIF D'ENTRAINEMENT POUR MOISSONNEUSE AGRICOLE

(30) Priorität: 12.07.1994 DE 4424442
(43) Veröffentlichungstag der Anmeldung: 02.05.1997
(73) Patentinhaber: SAME DEUTZ-FAHR S.P.A., 24047 Treviglio (Bergamo) (IT)
(72) Erfinder: HÄFELE, Martin, D-73460 Hüttlingen (DE); BERGHORN, Hermann, D-89426 Wittislingen (DE)
(74) Vertreter: Quinterno, Giuseppe
(86) Internationale Anmeldenummer: EP9502714
(87) Internationale Veröffentlichungsnummer: WO9601746

(56) Entgegenhaltungen:
- EP-A- 0 656 315
- AU-A- 406 161
- DE-A- 3 446 271
- DE-A- 3 511 370
- FR-A- 2 184 360
- GB-A- 887 551
- GB-A- 912 109
- US-A- 2 158 483
- US-A- 4 727 759
- LANDTECHNIK, Bd. 12, Nr. 9, Mai 1957 Seite 264 HANS SEIBOLD 'DREI VERSCHIEDENE ZAPFWELLEN'

## Beschreibung

Die Erfindung betrifft eine Antriebsvorrichtung für ein landwirtschaftliches Fahrzeug gemäß dem Oberbegriff des Patentanspruches 1.

Eine solche Antriebsvorrichtung ist aus der GB-A 912,109 bekannt. Dabei ist der Hydrostat (Hydropumpe und Hydromotor) als integraler Bestandteil in das Fahrzeuggetriebe integriert und dient als Parallelzweig zu dem Schaltgetriebe. Auch die kraftabzweigende Vorrichtung ist in das Getriebe integriert, wobei zwischen Antriebsquelle und Getriebe eine Kupplung vorgesehen ist. Darüberhinaus handelt es sich dabei um einen landwirtschaftlichen Traktor mit den traktorspezifischen Anforderungen an das Fahrgetriebe.

Der Erfindung liegt die Aufgabe zugrunde, eine Antriebsvorrichtung für eine landwirtschaftliche Erntemaschine bereitzustellen, wobei die Antriebsvorrichtung konstruktiv einfach gebaut sein soll und eine kraftabzweigende Vorrichtung zur Verfügung stellt, deren Drehzahl fahrgeschwindigkeitsabhängig variieren soll.

Diese Aufgabe wird dadurch gelöst, daß das Fahrzeug als selbstfahrende Erntemaschine ausgebildet ist und die kraftabzweigende Vorrichtung zum Antrieb weiterer Vorrichtungen der Erntemaschine dient, daß die Hydropumpe mit der Brennkraftmaschine kraftschlüssig verbunden ist, daß die kraftabzweigenden Vorrichtung hinter dem Hydromotor und vor dem Untersetzungsgetriebe angeordnet ist und daß die Kupplung zwischen der kraftabzweigenden Vorrichtung und dem Untersetzungsgetriebe eingebaut ist. Durch diese Ausgestaltung wird eine kraftabzweigende Vorrichtung zur Verfügung gestellt, mit der auch Vorrichtungen der Erntemaschine fahrgeschwindigkeitsproportional angetrieben werden können, so daß auch die Verarbeitungsgeschwindigkeit der weiteren Vorrichtungen der Fahrgeschwindigkeit der Erntemaschine angepaßt wird. Andererseits ist es nach Betätigung der Kupplung möglich, beispielsweise bei Stillstand der Maschine die weiteren Vorrichtungen weiter laufen zu lassen, so daß mit Stillstand der Maschine der Verarbeitungsprozeß weiterläuft. Der kraftabzweigenden Vorrichtung kann in Richtung der weiteren Vorrichtungen auch zumindest ein Getriebe nachgeschaltet sein. Es können sich hier auch weitere kraftabzweigende Vorrichtungen, weitere Kupplungen oder Schwungmassen anschließen.

In Weiterbildung der Erfindung ist zur Erhöhung der Wirksamkeit der kraftabzweigenden Vorrichtung eine Kupplung nachgeschaltet, mit der die weiteren Vorrichtungen zu- beziehungsweise abschaltbar sind. Die Ergänzung einer solchen Kupplung hat den Vorteil, daß sich die Antriebsmöglichkeiten erhöhen, da zum einen der Antrieb auf die Treibräder zubeziehungsweise abschaltbar ist, zum anderen auch der Antrieb für die weiteren Vorrichtungen der Erntemaschine zu- beziehungsweise abschaltbar ist. Damit ergeben sich je nach Einsatzbedingungen der landwirtschaftlichen Erntemaschine die Möglichkeiten, daß sowohl die Treibräder als auch die weiteren Vorrichtungen angetrieben werden, daß nur die Treibräder oder nur die weiteren Vorrichtungen angetrieben werden oder sowohl die Treibräder stillstehen als auch die weiteren Vorrichtungen abgeschaltet sind, so daß sich die Antriebsquelle quasi im Leerlauf befindet.

In Weiterbildung der Erfindung ist die in dem Antriebsstrang angeordnete Kupplung als kraftschlüssig wirkende Kupplung und/oder die vor den weiteren Vorrichtungen angeordnete Kupplung als formschlüssig wirkende Kupplung ausgebildet. Dies hat den Vorteil, daß die einzelnen Komponenten (Antrieb der Treibräder und Antrieb der weiteren Vorrichtungen) nach ihren konstruktiven Gegebenheiten und ihrem Einsatzzweck optimal in den Antriebsstrang eingekuppelt oder ausgekuppelt werden können, so daß auch ein möglichst verschleißfreier Betrieb dieser Komponenten gewährleistet ist.

In Weiterbildung der Erfindung ist die kraftabzeigende Vorrichtung als Winkelgetriebe ausgebildet. Damit ist eine problemlos arbeitende und konstruktiv einfach realisierbare kraftabzweigende Vorrichtung gegeben. Darüber hinaus ist dieses Winkelgetriebe in der sich im wesentlichen länglich erstreckenden Antriebsvorrichtung (insbesondere unterhalb eines Fahrerstandes der landwirtschaftlichen Erntemaschine), die sich im Antriebsachsenbereich befindet, leicht zu integrieren und gestattet einen direkten Antrieb der weiteren Vorrichtungen.

In Weiterbildung der Erfindung ist die Antriebsquelle nach Öffnen der in dem Antriebsstrang angeordneten Kupplung zur zumindest kurzzeitigen Drehrichtungsumkehr ausgebildet. Dies hat den Vorteil, daß, nachdem der Antrieb der Erntemaschine abgeschaltet worden ist, der Antrieb der weiteren Vorrichtungen umgekehrt wird, so daß beispielsweise im Falle einer Störung oder einer Verstopfung einer der weiteren Vorrichtungen diese Störung beziehungsweise Verstopfung durch die Drehrichtungsumkehr beseitigt werden kann. Dies kann beispielsweise einfach durch Knopfdruck von einer Bedienperson der Erntemaschine ausgelöst werden. Dabei ist allerdings sicherzustellen, daß vor der Drehrichtungsumkehr zunächst die in dem Antriebsstrang liegende Kupplung geöffnet wird.

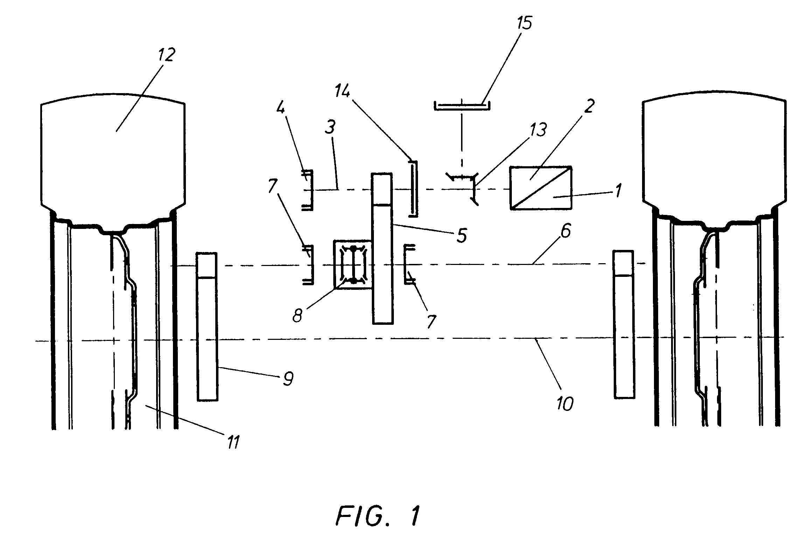

Weitere vorteilhafte Ausgestaltungen der Erfindung sind in den Unteransprüchen angegeben und im folgenden unter Bezugnahme auf die Figur 1 beschrieben.

**Figur 1** zeigt eine erfindungsgemäß ausgestaltete Antriebsvorrichtung für eine landwirtschaftliche Erntemaschine. Diese Antriebsvorrichtung weist eine Hydropumpe 1 und einen Hydromotor 2 auf, die schematisch dargestellt sind und wobei die Hydropumpe 1 von einer nicht dargestellten Brennkraftmaschine angetrieben wird. Der Hydromotor 2 wirkt zum einen über eine Welle 3 auf eine Feststellbremse 4, die im Stillstand der Erntemaschine betätigbar ist. Zum anderen wird über die Welle 3 ein Getriebe 5 angetrieben, das in erfindungsgemäßer Weise als einfaches Untersetzungsgetriebe ausgebildet ist. Dieses Getriebe 5 wirkt ausgangsseitig auf eine Welle 6, auf welcher Betriebsbremsen 7 (beispielsweise Scheibenbremsen, die während des Betriebes der Erntemaschine betätigbar sind) angeordnet sind, wobei weiterhin ein Differential 8 in der Welle 6 angeordnet ist, welches unterschiedliche Umfangsgeschwindigkeiten der Treibräder entkoppelt. Wie in Figur 1 gezeigt ist, wirkt die Welle 6 endseitig auf ein weiteres Getriebe 9 (ebenfalls ein einfaches Untersetzungsgetriebe), wobei dieses Getriebe 9 ausgangsseitig auf eine Welle 10 wirkt, auf der die Treibräder in Form von Felgen 11 und Reifen 12 angeordnet sind. Damit ist eine Antriebsvorrichtung für landwirtschaftliche Erntemaschinen gegeben, die sich in der Praxis bewährt hat, die zuverlässig arbeitet und insbesondere bei der Serienproduktion von landwirtschaftlichen Erntemaschinen kostengünstig herstellbar ist. Diese Antriebsvorrichtung ist nun erfindungsgemäß dadurch ergänzt, daß in dem Antriebsstrang eine kraftabzweigende Vorrichtung in Form eines Winkelgetriebes 13 angeordnet ist. Weiterhin ist, wie in Figur 1 zu erkennen ist, dem Winkelgetriebe 13 in dem Antriebsstrang eine Kupplung 14, die insbesondere kraftschlüssig wirkt, angeordnet. Mit dieser Kupplung 14 ist der Antrieb des Hydromotors 2 auf die Treibräder (Felgen 11 und Reifen 12) zubeziehungsweise abschaltbar. Dem Winkelgetriebe 13 ist eine insbesondere formschlüssig wirkende Kupplung 15 nachgeordnet, über die die weiteren Vorrichtungen (nicht gezeigt) zu- beziehungsweise abschaltbar sind. Damit ist der Antrieb der landwirtschaftlichen Erntemaschine und der Antrieb der in der landwirtschaftlichen Erntemaschine integrierten weiteren Vorrichtungen unabhängig oder abhängig je nach Einsatzbedingung betreibbar. Zur Realisierung einer möglichst kompakten Bauweise der erfindungsgemäß ausgestalteten Antriebsvorrichtung ist die kraftabzweigende Vorrichtung (Winkelgetriebe 13) direkt nahe dem Hydromotor 2 oder an diesem angeordnet.

Die erfindungsgemäß ausgestaltete Antriebsvorrichtung findet allgemein Verwendung bei landwirtschaftlichen Erntemaschinen. Ein besonderes Einsatzfeld sind Mähdrescher, wobei es sich bei den weiteren Vorrichtungen des Mähdreschers beispielsweise um Dresch-, Schüttler-, Sieb-, Schneid- und Aufnahmevorrichtungen handelt. Ein weiteres Einsatzfeld sind Erntemaschinen für die Grünfutteraufbereitung, wobei es sich dann bei den weiteren Vorrichtungen um Schneid-, Förder-, Aufbereitungs-, Preß- und Ablagevorrichtungen handelt. Als drittes Einsatzfeld seien als Erntemaschinen selbstfahrende Großballenpressen genannt, wobei es sich hierbei bei den weiteren Vorrichtungen um Aufnahmebeziehungsweise Preß- und Abgabevorrichtungen für die Großballen handelt. Die erfindungsgemäße Ausgestaltung ist selbstverständlicherweise nicht auf die drei genannten Erntemaschinen beschränkt, sondern kann auch auf weitere Einsatzgebiete (allgemein auf land- oder bauwirtschaftliche Fahrzeuge) und auch auf andersartige landwirtschaftliche Erntemaschinen (beispielsweise Feldhäcksler) ausgedehnt werden.

## Patentansprüche

1. Antriebsvorrichtung für ein landwirtschaftliches Fahrzeug, dessen auf die Treibräder (11, 12) wirkender Antriebsstrang eine als Brennkraftmaschine ausgebildete Antriebsquelle, eine Kupplung (14) zur Unterbrechung des Kraftflußes, eine Hydropumpe (1) mit angetriebenem Hydromotor (2) [Hydrostat], zumindest ein Untersetzungsgetriebe (5) und ein zwischen den Treibrädern (11, 12) wirkendes Differential (8) sowie eine kraftabzweigende Vorrichtung aufweist,
**dadurch gekennzeichnet,** daß das Fahrzeug als selbstfahrende Erntemaschine ausgebildet ist und die kraftabzweigende Vorrichtung zum Antrieb weiterer Vorrichtungen der Erntemaschine dient,
daß die Hydropumpe (1) mit der Brennkraftmaschine kraftschlüssig verbunden ist,
daß die kraftabzweigende Vorrichtung hinter dem Hydromotor (2) und vor dem Untersetzungsgetriebe (5) angeordnet ist und
daß die Kupplung (14) zwischen der kraftabzweigenden Vorrichtung und dem Untersetzungsgetriebe (5) eingebaut ist.

2. Antriebsvorrichtung nach Anspruch 1,
**dadurch gekennzeichnet,** daß der kraftabzweigenden Vorrichtung eine Kupplung (15) nachgeschaltet ist, mit der die weiteren Vorrichtungen zubeziehungsweise abschaltbar sind.

3. Antriebsvorrichtung nach Anspruch 1 oder 2,
**dadurch gekennzeichnet,** daß die in dem Antriebsstrang angeordnete Kupplung (14) als kraftschlüssig wirkende Kupplung und die vor den weiteren Vorrichtungen angeordnete Kupplung (15) als formschlüssig wirkende Kupplung ausgebildet ist.

4. Antriebsvorrichtung nach einem der vorhergehenden Ansprüche,
**dadurch gekennzeichnet,** daß die kraftabzweigende Vorrichtung als Winkelgetriebe (13) ausgebildet ist.

5. Antriebsvorrichtung nach einem der vorhergehenden Ansprüche,
**dadurch gekennzeichnet,** daß in dem Antriebsstrang Bremsen [wie zum Beispiel Feststell- (4) und/oder Betriebsbremsen (7)] vorgesehen sind.

## Claims

1. A drive arrangement for an agricultural vehicle, whose drive train which operates on the drive wheels (11, 12) has a combustion engine configured as the drive source, a coupling (14) to interrupt the power flow, a hydraulic pump (1) with a hydraulic motor (2) driven from it [Hydrostat], at least one reduction gearing (5) and a differential (8) working between the drive wheels (11, 12) and a power take off arrangement,
**characterised in that** the vehicle is constructed as a self-propelled harvesting machine and the power take off arrangement serves to drive further devices in the harvesting machine,
that the hydraulic pump (1) is connected by frictional means to the combustion engine,
that the power take off arrangement is arranged after the hydraulic motor (2) and before the reduction gearing (5) and
that the coupling (14) is built in between the power take off arrangement and the reduction gearing (5).

2. A drive arrangement according to Claim 1,
**characterised in that** the power take off arrangement is connected following a coupling (15), by means of which the further devices can be connected or disconnected.

3. A drive arrangement according to Claim 1 or Claim 2,
**characterised in that** the coupling (14) arranged in the drive train is configured as a friction coupling and that the coupling (15) arranged before the further devices is configured as a positive coupling.

4. A drive arrangement according to one of the previous Claims,
**characterised in that** the power take off arrangement is constructed as an angle drive (13).

5. A drive arrangement according to one of the previous Claims,
**characterised in that** brakes [as for instance parking- (4) and/or operating brakes (7)] are provided in the drive train.

## Revendications

1. Dispositif d'entraînement d'un véhicule à usage agricole dont la ligne de transmission agissant sur les roues motrices (11, 12) comprend une source motrice en forme de moteur à combustion interne, un embrayage (14) pour couper la ligne de transmission de force, une pompe hydraulique (1) avec un moteur hydraulique (2) entraîné (hydrostat), au moins une transmission réductrice (5) et un différentiel (8) agissant entre les roues motrices (11, 12) de même qu'une prise de force,
caractérisé en ce que
le véhicule est une moissonneuse automotrice et la prise de force entraîne les autres dispositifs de la moissonneuse,
- la pompe hydraulique (1) est reliée au moteur à combustion interne par une liaison par la force,
- la prise de force se trouve en aval du moteur hydraulique (2) et en amont de la transmission réductrice (5) et
- l'embrayage (14) est monté entre la prise de force et la transmission réductrice (5).

2. Dispositif d'entraînement selon la revendication 1,
caractérisé en ce que
la prise de force est suivie d'un embrayage (15) permettant de brancher ou de couper d'autres dispositifs.

3. Dispositif d'entraînement selon la revendication 1 ou 2,
caractérisé en ce que
l'embrayage (14) de la ligne de transmission est un embrayage agissant par une liaison par la force et l'embrayage (15), prévu en amont des autres dispositifs, est un embrayage agissant par une liaison par la forme.

4. Dispositif d'entraînement selon l'une quelconque des revendications précédentes,
caractérisé en ce que
la prise de force est une transmission à renvoi d'angle (13).

5. Dispositif d'entraînement selon l'une quelconque des revendications précédentes,
caractérisé en ce que
la ligne de transmission comporte des freins (comme par exemple des freins d'arrêt (4) et/ou des freins de fonctionnement (7)).
